# EUROPÄISCHE PATENTSCHRIFT

(11) **EP 3 367 227 B1**
(45) Veröffentlichungstag und Bekanntmachung des Hinweises auf die Patenterteilung: **24.04.2024**
(21) Anmeldenummer: 18156781.9
(22) Anmeldetag: 14.02.2018
(51) Int. Cl.: G06F 3/04842, G06F 3/0482, G06F 3/04883

(54) **BEDIENSYSTEM, VERFAHREN ZUM BEDIENEN EINES BEDIENSYSTEMS UND EIN FAHRZEUG MIT EINEM BEDIENSYSTEM**
OPERATING SYSTEM, METHOD FOR OPERATING AN OPERATING SYSTEM AND A MOTOR VEHICLE PROVIDED WITH OPERATING SYSTEM
SYSTÈME D'EXPLOITATION, PROCÉDÉ DE FONCTIONNEMENT D'UN SYSTÈME D'EXPLOITATION ET VÉHICULE DOTÉ D'UN SYSTÈME D'EXPLOITATION

(30) Priorität: 24.02.2017 DE 102017001807
(43) Veröffentlichungstag der Anmeldung: 29.08.2018
(73) Patentinhaber: MAN Truck & Bus SE, 80995 München (DE)
(72) Erfinder: Mohra, Holger, 80805 München (DE); Arnold, Claus, 93161 Sinzing (DE); Zademach, Martin, 85232 Bergkirchen (DE); Güllich, Johannes, 85229 Markt Indersdorf (DE); Ochs, Thomas, 82178 Puchheim (DE)
(74) Vertreter: v. Bezold & Partner Patentanwälte - PartG mbB

(56) Entgegenhaltungen:
- EP-A2- 2 293 175
- EP-B1- 2 293 175
- US-A1- 2015 363 052

## Beschreibung

Die Erfindung betrifft ein Bediensystem, ein Verfahren zum Bedienen eines Bediensystems und ein Fahrzeug mit einem Bediensystem.

Solche Bediensysteme bilden in Fahrzeugen eine Benutzerschnittstelle bzw. eine Mensch-Maschinen-Schnittstelle, über die ein Nutzer Einfluss auf fahrzeugintegrierte Funktionen nehmen oder Informationen über eine bestimmte Fahrzeugfunktion abrufen kann. Wesentliche Bestandteile des Bediensystems sind ein Eingabeelement, eine Anzeigevorrichtung und eine Steuervorrichtung, wobei das Eingabeelement und die Anzeigevorrichtung an die Steuervorrichtung gekoppelt sind und die Steuervorrichtung derart ausgestaltet ist, dass sie - insbesondere abhängig von einer Eingabe des Nutzers mittels des Eingabeelements - eine Anzeige auf der Anzeigevorrichtung steuert bzw. kontrolliert.

Dabei sind die Anzeigevorrichtungen in Fahrzeugen oftmals durch bauliche Gegebenheiten in ihrer Größe beschränkt, oder es lässt sich wegen ihrer Lage, z. B. bei einer Anordnung vom Fahrzeugsitz aus gesehen hinter dem Lenkrad, nur ein beschränkter Bildbereich wahrnehmen. Gleichzeitig nimmt die Anzahl der potentiell abrufbaren Funktionen oder Informationen, die an das Bediensystem gekoppelt sind, sukzessive zu, so dass es der Stand der Technik vorsieht, Informationen und/oder auswählbare Funktionen zu gruppieren und in Subgruppen unter einem Oberbegriff zu sammeln, wodurch der Nutzer am Bediensystem über den Oberbegriff zu der gewünschten Information oder Funktion durchnavigieren kann. Infolgedessen entstehen Listen aus Listenelementen, denen jeweils ein oder mehrere Elemente zugeordnet sind. Beim Zugriff auf ein Element wird dem Nutzer dabei typischerweise eine Art Baumstruktur angezeigt, die ihm Aufschluss gibt, an welcher Stelle er sich in der Hierarchie aus Listenelementen und untergeordneten Elementen befindet.

Allerdings nehmen solche Baumstrukturen, in denen simultan Listenelemente und die zu dem ausgewählten Listenelement zugeordneten Elemente angezeigt werden, sehr viel Platz ein, so dass für die eigentliche Zielinformation bzw. Zielfunktion nur ein vergleichsweise kleiner Bereich bereitgestellt werden kann. Zudem muss sich der Nutzer in der verschachtelten bzw. verästelten Baumstruktur zunächst zurechtfinden, was ihn in der Praxis entsprechend viel Zeit kostet. Sofern es sich bei dem Nutzer um den Fahrer des Fahrzeugs handelt, wird dieser unter Umständen dadurch für eine beträchtliche Zeitspanne abgelenkt und kann in dem entsprechenden Zeitraum seine Aufmerksamkeit nicht dem aktuellen Verkehr widmen. Dadurch steigt das Unfallrisiko.

EP 2 293 175 A2 beschreibt eine Bedienvorrichtung und Verfahren zum Bereitstellen einer Bedienvorrichtung, bei dem mittels der Betätigung einer Eingabeeinrichtung eine Informationsanzeige auf eine Anzeigefläche gesteuert wird, wobei die anzeigbaren Informationen zumindest zwei Listen mit jeweils mehreren Listeneinträgen umfassen und zwischen der Anzeige eines Anzeigeinhalts einer ersten und zweiten Liste gewechselt werden kann.

US 2015/0363052 A1 beschreibt ein Verfahren zur Auswahl eines Elements aus einer Liste, wobei bei Erreichen eines spezifischen Elements eine Zeitspanne der Inaktivität ausgelöst wird, innerhalb derer Nutzereingaben bezüglich des Bildlaufs ignoriert werden.

Es ist daher einer Aufgabe der vorliegenden Erfindung, ein Bediensystem bereitzustellen, das trotz einer in der Größe beschränkten Anzeigefläche dem Nutzer auf unkomplizierte, intuitive und vergleichsweise schnelle Weise Zugang zu den gewünschten Informationen oder Funktionalitäten des Fahrzeugs gibt.

Diese Aufgabe wird durch ein Bediensystem, ein Verfahren zum Betreiben des Bediensystems und ein Fahrzeug mit einem Bediensystem mit den Merkmalen des unabhängigen Anspruchs gelöst. Vorteilhafte Ausführungsformen und Anwendungen der Erfindung ergeben sich aus den anhängigen Ansprüchen und werden in der folgenden Beschreibung unter teilweise Bezugnahme auf die Figuren näher erläutert.

Gemäß einem ersten Gesichtspunkt ist ein Bediensystem für ein Fahrzeug vorgesehen, das eine Anzeigevorrichtung mit einer Anzeigefläche, ein Eingabeelement und eine Steuervorrichtung umfasst. Die auswählbaren Listenelemente und Elemente, die den Listenelementen zugeordnet sind, sind in einer Speichereinrichtung gespeichert. Zudem ist die Steuervorrichtung an das Eingabeelement und die Anzeigevorrichtung gekoppelt, wodurch insbesondere eine kommunikative Verbindung einerseits zwischen der Steuervorrichtung und dem Eingabeelement und andererseits zwischen der Steuervorrichtung und der Anzeigevorrichtung realisiert ist. Grundsätzlich ist die Steuervorrichtung dabei derart ausgestaltet, dass mit ihr eine wiedergebende Anzeige auf der Anzeigefläche steuerbar ist. Dadurch lassen sich beispielsweise von dem Eingabeelement kommende Befehle durch die Steuervorrichtung auf der Anzeigefläche visualisieren.

Unter Steuern ist dabei grundsätzlich sowohl eine Veranlassung einer Anzeige als auch eine Modifikation des auf der Anzeige Dargestellten zu verstehen. Dabei ist es erfindungsgemäß vorgesehen, dass die Steuervorrichtung so konfiguriert ist, dass sie die Anzeigefläche derart ansteuert, dass in einem ersten Anzeigemodus zumindest ein Teil der Listenelemente auf der Anzeigefläche in Form einer Liste angezeigt wird und dass durch eine Auswahl eines Listenelements ein Wechsel vom ersten Anzeigemodus zu einem zweiten Anzeigemodus realisiert wird. Über den Wechsel vom ersten Anzeigemodus in den zweiten Anzeigemodus wird vorteilhaft ein Wechsel von der Ebene der Listenelemente in eine zu der Ebene der Listenelemente untergeordneten Subebene bzw. Unterebene der Elemente, die dem ausgewählten Listenelement zugeordnet sind, visuell kenntlich gemacht.

Um einen möglichst großen Bereich für die Darstellung des oder der Elemente bereitstellen zu können und dem Nutzer gleichzeitig zu vermitteln, an welcher Stelle er sich in der Hierarchie aus Listenelement und Element im Anschluss navigiert, ist es vorgesehen, dass beim Wechsel durch die Steuervorrichtung eine animierte Öffnungsbewegung erzeugt wird, bei der
-- ein Darstellungsbereich durch ein Vergrößern, d. h. ein Aufzoomen, eines dem ausgewählten Listenelement zugeordneten Anzeigeflächenbereichs freigegeben wird und die zum ausgewählten Listenelement benachbarten weiteren Listenelemente verschoben werden, bis alle weiteren Listenelemente von der Anzeigefläche durch den Darstellungsbereich verdrängt sind und
-- der Darstellungsbereich für die wiedergebende Anzeige zumindest eines zugeordneten Elements des ausgewählten Listenelements, insbesondere in Form eines Informationsfensters, bereitgestellt wird. Mit anderen Worten: der dem ausgewählten Listenelement zugeordnete Anzeigenflächenbereich wird durch die animierte Öffnungsbewegung aufgezoomt und der aufgezoomte Anzeigenflächenbereich dient als Darstellungsbereich der Darstellung zumindest eines zugeordneten Elements.

Gegenüber dem Stand der Technik wird durch die erfindungsgemäß animierte Öffnungsbewegung ein derartiger Darstellungsbereich geschaffen, der ausreichend Platz für die Darstellung bzw. Anzeige des oder der Elemente, die dem ausgewählten Listenelement zugeordnet sind, bereitstellt. Hierbei sorgt im Besonderen das Heraus-Verschieben aller Listenelemente aus der Anzeigefläche dafür, dass sich die Anzeigefläche zur ausführlichen Darstellung des oder der Elemente nutzen lässt. Dadurch dass das ausgewählte Listenelement bzw. ein dem ausgewählten Listenelement zugeordneter Anzeigeflächenbereichs aufgezoomt wird, erhält der Nutzer zusätzlich eine Information darüber, an welcher Stelle er sich in der hierarchischen Struktur aus Listenelementen und Elementen befindet. Als Informationsfenster ist insbesondere eine flächige bzw. kachelförmige Darstellung des Elements zu verstehen. Gegenüber den übergeordneten Listenelementen lassen sich die Informationsfenster für eine möglichst intuitive Aufnahme der auf dem Informationsfenster angegebenen Informationen ausgestalten.

Vorzugsweise ist es vorgesehen, dass das Bediensystem Teil eines Infotainmentsystems ist. Weiterhin ist es insbesondere vorgesehen, dass die Steuervorrichtung als Prozessor mit einem abgespeicherten Computerprogramm ausgebildet ist. Dabei ist es vorstellbar, dass die Steuervorrichtung räumlich getrennt ist von der Anzeigevorrichtung und dem Eingabeelement. Ferner ist es denkbar, dass die Speichereinrichtung in die Steuervorrichtung integriert ist. Beispielsweise ist die Anzeigevorrichtung in das Armaturenbrett eingelassen, wobei die Anzeigevorrichtung vorzugsweise neben der Anzeigefläche weitere Anzeigeflächen aufweist, wobei die weiteren Anzeigeflächen zur Darstellung von dauerhaft benötigten Informationen vorgesehen sind und z. B. als Tachometer oder als Anzeige zur Angabe einer aktuellen Füllmenge eines Kraftstofftanks ausgestaltet sind. Lediglich beispielhaft kann die Anzeigefläche ein Display, ein Teilbereich oder ein vorbestimmter Anzeigebereich eines Displays eines Kombiinstruments oder Infotainmentsystems des Fahrzeugs sein. Die Anzeigefläche kann jedoch auch ein anderes Display oder ein Teilbereich eines anderen Displays sein, das sich im Fahrzeug befindet. Das Eingabeelement kann Bedientasten und/oder Dreh-Drück-Steller umfassen. Diese können beispielsweise an einem Multifunktionslenkrad angeordnet sein. Das Eingabeelement kann ferner Bedienelemente einer Innenfernbedienung mit Direkttasten-Bedienung umfassen. Das Eingabeelement kann auch eine sprachgesteuerte Eingabeschnittstelle umfassen.

Gemäß einer weiteren Ausführungsform der vorliegenden Erfindung ist vorgesehen, dass die Steuervorrichtung konfiguriert ist, die Anzeigefläche derart anzusteuern, dass im ersten Anzeigemodus im Wesentlichen die gesamte Anzeigefläche zur wiedergebenden Anzeige des zumindest einen Teils der Listenelemente und/oder im zweiten Anzeigemodus im Wesentlichen die gesamte Anzeigefläche zur wiedergebenden Anzeige des zumindest einen Elements des ausgewählten Listenelements genutzt wird. Dadurch wird in vorteilhafter Weise zur Darstellung der Listenelemente bzw. der Elemente ein möglichst großer Bereich zur Verfügung gestellt. Dabei versteht der Fachmann unter einer im Wesentlichen gesamten Anzeigefläche eine solche, die, bis auf permanent angezeigte Dekorationselemente oder Menüleisten bzw. Menüpunkte, ausschließlich die Listenelemente bzw. die Elemente auf der Anzeigefläche abbildet. Vorstellbar ist auch, dass die Anzeigefläche von den Elementen im zweiten Anzeigemodus großflächiger ausgefüllt ist als von der Liste der Listenelemente im ersten Anzeigemodus.

Die Steuervorrichtung ist so konfiguriert, dass sie die Anzeigefläche derart ansteuert, dass im zweiten Anzeigemodus ein einzelnes Element in Form eines einzelnen Informationsfensters angezeigt wird. Dadurch wird die Anzeige auf der Anzeigefläche auf das gerade dargestellte Element beschränkt und der Nutzer kann sich, ohne weiteren Orientierungsaufwand, dem Inhalt des dargestellten Elements widmen. Zudem kann das Informationsfenster entsprechend so groß ausgestaltet sein, dass auch Detailinformationen für den Nutzer ohne großen Aufwand schnell aufgenommen werden können. Außerdem dient die Darstellung des Elements als Informationsfenster dem Nutzer als Hinweis darauf, dass er sich aktuell in der Subebene der Elemente befindet. Vorstellbar ist auch, dass den einzelnen Elementen jeweils verschiedene Farben oder Farbtöne zugeordnet sind, so dass beim Wechsel zwischen den Elementen der Nutzer nach einer gewissen Eingewöhnungsphase durch ein flüchtiges peripheres Sehen schnell erfährt, ob er sich zum gewünschten Element durchnavigiert hat.

Es ist vorgesehen, dass die Steuervorrichtung so konfiguriert ist, dass sie die Anzeigefläche derart ansteuert, dass im ersten Anzeigemodus ein Wechsel zwischen den Listenelementen und im zweiten Anzeigemodus ein Wechsel zwischen den Elementen des ausgewählten Listenelements durch eine Bildlauf-Funktionalität, vorzugsweise durch eine Bildlauf-Funktionalität mit einer gleichgerichteten Bildlaufrichtung im ersten Anzeigemodus und im zweiten Anzeigemodus, realisiert wird. Durch die gleichgerichtete Bildlauf-Funktionalität wird in vorteilhafter Weise dem Nutzer der Eindruck suggeriert, dass er sich beim Wechseln zwischen den Elementen im zweiten Anzeigemodus bei der Anwahl der Listenelemente im ersten Anzeigemodus befindet. Ein weiterer positiver Aspekt ist, dass eine Betätigungsart des Eingabeelements, z. B. das Drehen eines Dreh-Drückschalters, im ersten Anzeigemodus und im zweiten Anzeigemodus mit derselben Funktionalität belegt werden kann. Der Wechsel zwischen den Listenelementen im ersten Anzeigemodus und/oder der Wechsel zwischen den Elementen des ausgewählten Listenelements im zweiten Anzeigemodus kann von einem Nutzer durch eine Bedienung des Eingabeelements gesteuert werden. Grundsätzlich ist unter einer Bildlauf-Funktionalität eine Scroll-Funktionalität zu verstehen, bei der zwischen den einzelnen Listenelementen oder Elementen entlang einer Bildlaufrichtung gewechselt wird. Insbesondere lässt sich die Bildlauf-Funktionalität dazu nutzen, aktuell auf der Anzeigefläche nicht wiedergegebene Listenelemente auf die Anzeigefläche nachrücken zu lassen. Dadurch erhält man in vorteilhafter Weise Zugriff auf alle Listenelemente, ohne dass sie alle auf der Anzeigefläche dargestellt sein müssen.

Vorteilhaft ist es insbesondere, wenn im zweiten Anzeigemodus mittels der Bildlauf-Funktionalität zwischen jeweils einzeln auf der Anzeigefläche dargestellten Informationsfenstern gewechselt wird. Dadurch kann sich der Nutzer jeweils auf die isoliert dargestellten Informationsfenster konzentrieren, ohne von anderen Elementen abgelenkt zu werden, und mittels der Bildlauf-Funktionalität kann der Nutzer zwischen den einzelnen Informationsfenstern wechseln, bis er beim gewünschten Element anlangt. Eine derartige Bildlauffunktionalität bzw. Scroll-Funktionalität von Informationsfenstern kann auch als Cover-Flow-Funktionalität bezeichnet werden.

Es ist vorgesehen, dass die einem Listenelement zugeordneten Elemente in einer Liste mit einem Listenanfang und einem Listenende sortiert sind. Das Bediensystem ist derart ausgestaltet, dass am Listenanfang und/oder am Listenende ein sogenannter Softanschlag ausgebildet ist, wobei eine Überwindung des Softanschlags beim Erreichen des Listenanfangs und/oder des Listenendes eine direkte Rückkehr in den ersten Anzeigemodus auslöst, so dass wiederum zumindest ein Teil der Listenelemente in Form einer Liste angezeigt werden.

Dabei ist das Bediensystem vorzugsweise derart ausgestaltet, dass die Steuervorrichtung die Anzeigefläche zur Ausbildung des Softanschlags derart ansteuert, dass beim Erreichen des Listenanfangs oder des Listenendes der Bildlauf in eine bisherige Bildlaufrichtung gestoppt wird. Ferner kann das Bediensystem zur Ausbildung des Softanschlags bei Erreichen des Listenanfangs und/oder Listenendes ein optisches, akustisches und/oder haptisches Signal ausgeben.

Gemäß einem weiteren Aspekt kann das Bediensystem so ausgeführt sein, dass zur Überwindung des Softanschlags ein festgelegtes Zeitintervall, das mit einem Unterbrechen des Betätigungsvorgangs am Eingabeelement nach Erreichen des Listenanfangs oder des Listenendes beginnt, abgelaufen sein muss. Dabei kann die Rückkehr automatisch nach Ablauf des festgelegten Zeitintervalls erfolgen, oder die Rückkehr bedarf einer erneuten Betätigung des Eingabeelements, vorzugsweise einer neuen Betätigung, die in der Liste der Elemente einen Bildlauf in die bisherige Bildlaufrichtung veranlassen würde.

Als besonders vorteilhaft erweist sich im Besonderen der Umstand, dass das festgelegte Zeitintervall erst dann beginnt, wenn der Betätigungsvorgang für den Listendurchlauf in die bisherige Listendurchlaufrichtung unterbrochen wurde. Dadurch lässt sich vermeiden, dass der Nutzer durch ein Fortsetzen des Betätigungsvorgangs am Eingabeelement versehentlich den Listendurchlauf fortsetzt, z. B. wenn er das optische, akustische und/oder haptische Signal nicht registriert. Wenn er nach einer Weile auf die Anzeigevorrichtung blickt, wird der Nutzer stattdessen erkennen, dass er sich an das Listenende oder den Listenanfang navigiert hat. Durch ein Unterbrechen des Betätigungsvorgangs am Eingabeelement und nach einem anschließenden Abwarten des Zeitintervalls kann der Nutzer wieder in den ersten Anzeigemodus zurückkehren.

Eine alternative Realisierung eines Softanschlags sieht vor, dass zur Überwindung des Softanschlags eine stärkere als sonst übliche Betätigungskraft am Eingabeelement aufzubringen ist, d. h. eine Betätigungskraft, die stärker ist als diejenige, die für das normale Durchscrollen der Liste erforderlich ist.

Alternativ oder ergänzend ist es vorstellbar, dass beispielsweise durch ein Betätigen eines Tasters eine direkte Rückkehr in den ersten Anzeigemodus veranlasst wird. Beispielsweise handelt es sich bei dem Betätigen um ein erneutes Drücken am Dreh-Drückschalter oder um eine Rücksprungtaste, die z. B. in das Lenkrad eingelassen ist. Insbesondere ist die sortierte Liste in der Speichereinrichtung hinterlegt und gibt die Reihenfolge für den Wechsel zwischen den Elementen an, wobei es ausreicht, wenn ein einzelnes Element auf der Anzeigefläche dargestellt wird. Mit anderen Worten: die aus den Elementen gebildete Liste muss als solche nicht auf der Anzeigefläche erkennbar sein.

Ein Vorteil der vorgenannten Aspekte ist, dass der Nutzer ohne weiteren Betätigungsaufwand unter Fortsetzung der bisherigen Bildlauf-Funktionalität auf unkomplizierte Weise seine Suche in der Ebene der Listenelemente fortsetzten kann, ohne dass ihm das Gefühl vermittelt wird, er würde zwischen der Ebene der Listenelemente und der Subebene der Elemente hin- und herspringen. Sofern es sich um ein haptisches oder akustisches Signal am Eingabeelement handelt, ist der Fahrer nicht gezwungen, seinen Blick auf die Anzeigevorrichtung zu richten. Sofern es sich um ein optisches Signal handelt, lässt sich dieses durch eine Anzeige auf der Anzeigefläche realisieren, so dass das Bediensystem kein zusätzliches Bauteil zur Erzeugung einer Rückmeldung beim Erreichen des Listenendes oder den Listenanfangs benötigt. Im Falle des optischen Signals handelt es sich beispielsweise um ein Leerelement, das keine Informationen enthält und sich beispielsweise durch die Farbe oder ein bestimmtes dargestelltes Zeichen von den anderen Elementen des ausgewählten Listenelements unterscheidet. Als haptisches Signal ist ein wahrnehmbarer Widerstand am Eingabeelement oder eine Vibration des Eingabeelements vorstellbar. Ein Brumm- oder Klickgeräusch ist als mögliches akustisches Signal vorstellbar. Vorzugsweise ist es vorgesehen, dass das optische Signal mit einem haptischen und/oder akustischen Signal kombiniert ist.

In einer weiteren Ausführungsform der vorliegenden Erfindung ist vorgesehen, dass die Steuervorrichtung die Anzeigefläche so ansteuert, dass die animierte Öffnungsbewegung derart gestaltet ist, dass zur Freigabe des Darstellungsbereichs der dem ausgewählten Listenelement zugeordnete Anzeigeflächenbereich sowohl in Richtung einer oberen und einer unteren Kante der Anzeigenfläche aufgezoomt wird, insbesondere symmetrisch aufgezoomt wird, wobei die zum ausgewählten Listenelement benachbarten weiteren Listenelemente zuerst in Richtung der oberen oder unteren Kante der Anzeigenfläche geschoben und anschließend aus der Anzeigenfläche hinausgeschoben werden. Dabei werden die oberhalb vom ausgewählten Listenelement angeordneten weiteren Listenelemente zur oberen Kante der Anzeigenfläche verschoben und die unterhalb vom ausgewählten Listenelement angeordneten weiteren Listenelemente zur unteren Kante der Anzeigenfläche verschoben. Eine Kante der Anzeigenfläche entspricht einem Endbereich bzw. einer Begrenzungskante der Anzeigenfläche.

Mit anderen Worten kann die animierte Öffnungsbewegung derart gestaltet sein, dass zur Freigabe des Darstellungsbereichs die zum ausgewählten Listenelement benachbarten weiteren Listenelemente in einer spiegelsymmetrischen Öffnungsbewegung auseinandergeschoben werden, wobei insbesondere jeweils mindestens eines der weiteren Listenelemente in Richtung einer Anzeigeflächenkante und mindestens eines der weiteren Listenelement in Richtung einer der Anzeigeflächenkante gegenüberliegenden weiteren Anzeigeflächenkante verschoben werden. Auf diese Art wird dem Nutzer in vorteilhafter Weise möglichst intuitiv vermittelt, an welcher Stelle er in der aus Listenelementen und Elementen gebildeten Hierarchie nach dem gewünschten Element sucht. Vorzugsweise ist das ausgewählte Listenelement in vertikaler Richtung gesehen mittig auf der Anzeigefläche angeordnet und die animierte Öffnungsbewegung erfolgt spiegelsymmetrisch zu einer durch die Mitte der Anzeigefläche verlaufenden Spiegelebene, d. h. die weiteren Listenelemente werden spiegelsymmetrisch zur Mitte der Anzeigefläche auseinandergeschoben.

Um den Nutzer beim Wechsel vom ersten Anzeigemodus in den zweiten Anzeigemodus nicht zu erschrecken, ist es vorgesehen, dass bei der animierten Öffnungsbewegung die weiteren Listenelemente
- mit einer während der Öffnungsbewegung zunehmenden Geschwindigkeit und/oder
- mit einer Geschwindigkeit zwischen 1 cm/s und 20 cm/s, bevorzugt mit einer Geschwindigkeit zwischen 2 cm/s und 15 cm/s und besonders bevorzugt mit einer Geschwindigkeit zwischen 10 cm/s und 13 cm/s
auseinandergeschoben werden. Durch diese vergleichsweise langsamen Geschwindigkeiten lässt sich vermeiden, dass der Nutzer beim Wechsel vom ersten Anzeigemodus in den zweiten Anzeigemodus wegen eines plötzlich ändernden Anzeigenwechsels reflexartig auf die Anzeigefläche blickt. Gleichzeitig lässt sich mit einer schneller werdenden Öffnungsbewegung sicherstellen, dass der Wechsel möglichst wenig Zeit kostet und der Nutzer möglichst schnell zu seiner gewünschten Information oder Funktionalität gelangt.

Gemäß einer weiteren Ausführungsform der vorliegenden Erfindung ist vorgesehen, dass die den Listenelementen zugeordneten Elemente Detailinformationen zum ausgewählten Listenelement umfassen. Dadurch lässt sich eine möglichst intuitive Zuordnung des Elements zu den Listenelemente realisieren, die dem Nutzer die Orientierung und die Auswahl erleichtert.

In einer weiteren Ausführungsform der vorliegenden Erfindung ist vorgesehen, dass die Elemente im zweiten Anzeigemodus Graphiken, z. B. textfreie Graphiken, beispielsweise schematische Darstellungen und/oder Piktogramme, mit Text kombinierte Graphiken, Videobilder und/oder Fahrzeugkamerabilder umfassen. Dadurch kann der Nutzer möglichst schnell grobe Informationen über den aktuellen Fahrzeugstand erhalten. Beispielsweise zeigt die schematische Darstellung die Bremsen an den einzelnen Fahrzeugrädern. Der Text, der mit der Graphik kombiniert ist, ist z. B. eine Überschrift. Durch eine farbliche Markierung lässt sich z. B. ein Abnutzungszustand illustrieren, so dass der Nutzer auf einen Blick erkennen kann, an welchem Fahrzeugrad die Bremse in näherer Zukunft möglicherweise Probleme verursachen könnte.

Vorzugsweise ist es vorgesehen, dass sich zur Unterscheidung zwischen Listenelement und Element eine Hintergrundfarbe der Anzeigefläche im ersten Anzeigemodus von der Hintergrundfarbe der Anzeigefläche im zweiten Anzeigemodus unterscheidet. Die sich unterscheidende Hintergrundfarbe kann dem Nutzer als zusätzliche Orientierungshilfe dienen, die ihm mitteilt, an welcher Stelle in der aus Listenelementen und Elementen gebildeten Hierarchie er sich befindet, ohne dass auf der Anzeigefläche der explizite Hinweis auf das ausgewählte Listenelement angegeben sein muss.

Ein weiterer Gegenstand der vorliegenden Erfindung ist ein Verfahren zum Bedienen eines Bediensystems umfassend die Schritte:
- Auswählen eines Listenelements aus einer auf der Anzeigefläche angezeigten Liste von Listenelementen
- Wechsel von einem ersten Anzeigemodus zum zweiten Anzeigemodus im Anschluss an die Auswahl des Listenelements,
wobei beim Wechsel in einer animierten Öffnungsbewegung ein Darstellungsbereich durch ein Vergrößern eines dem ausgewählten Listenelement zugeordneten Anzeigeflächenbereichs unter Verdrängen aller zum ausgewählten Listenelement benachbarten weiteren Listenelemente freigegeben wird und der Darstellungsbereich zur Darstellung zumindest eines Elements, das dem ausgewählten Listenelement zuzuordnen ist, bereitgestellt wird.

Ein weiterer Gegenstand der vorliegenden Erfindung ist ein Fahrzeug, insbesondere Nutzfahrzeug, mit einem erfindungsgemäßen Bediensystem.

Gemäß einer weiteren Ausführungsform der vorliegenden Erfindung ist vorgesehen, dass ein Lenkrad zwischen einem Fahrzeugsitz des Fahrzeugs und der Anzeigevorrichtung angeordnet ist. In einer solchen Anordnung erweist sich das Bediensystem insofern besonders vorteilhaft, als dass das Lenkrad das Blickfeld auf die Anzeigevorrichtung einschränkt und eine entsprechend geringe effektiv nutzbare Anzeigefläche zur Verfügung steht.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Fig. 1: ein Ausschnitt aus einem Fahrzeuginnenraum mit einer Anzeigevorrichtung;
- Fig. 2a bis 2c: eine schematische Darstellung eines Bediensystems gemäß einer beispielhaften Ausführungsform der vorliegenden Erfindung; und
- Fig. 3: eine schematische Darstellung der Anzeigevorrichtung des Bediensystem aus den Figuren 2a bis 2c im ersten Anzeigemodus und im zweiten Anzeigemodus.

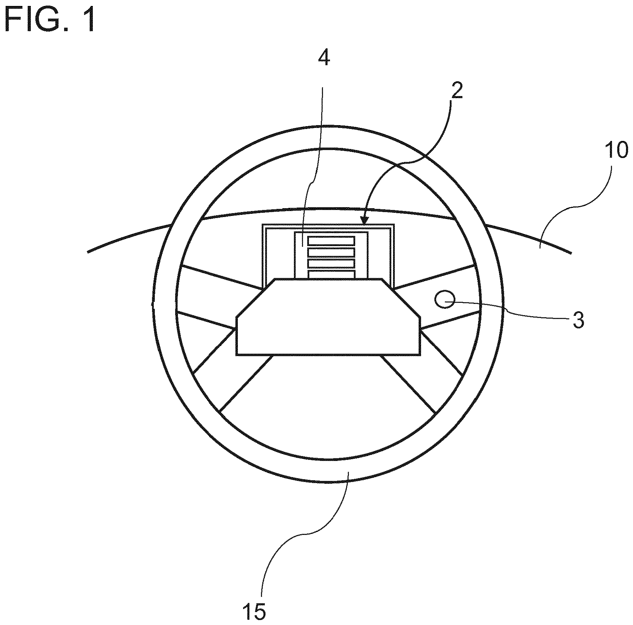

In Figur 1 ist ein Ausschnitt aus einem Fahrzeuginnenraum mit einer Anzeigevorrichtung 2 dargestellt. Insbesondere handelt es sich um eine Anzeigevorrichtung 2, die in ein Armaturenbrett 10 eingelassen ist und dabei von einem Fahrzeugsitz aus gesehen hinter einem Lenkrad 15 angeordnet ist. Eine solche Anzeigevorrichtung 2 umfasst eine Anzeigefläche 4, auf der Informationen über den aktuellen Fahrzeugzustand oder bestimmte Fahrzeugfunktionalitäten dem Nutzer, beispielsweise dem Fahrer, bereitgestellt werden. Insbesondere ist die Anzeigefläche 4 zur Darstellung von Listenelementen 11, 11' vorgesehen, die in einer Liste sortiert sind und bei deren jeweiliger Auswahl dem Nutzer Zugang zu Elementen, die dem ausgewählten Listenelement 11 zugeordnet sind, verschafft wird.

Die Auswahl wird dabei beispielsweise über ein manuell zu betätigendes Eingabeelement 3, das in der dargestellten Ausführungsform in das Lenkrad 15 eingelassen ist, vorgenommen. Wegen des Lenkrads 15 zwischen dem Fahrer und der Anzeigevorrichtung 2 beschränkt das Lenkrad ein freies Sichtfeld auf die gesamte Anzeigevorrichtung 2, so dass die Anzeigefläche 4 in ihrer Größe beschränkt ist.

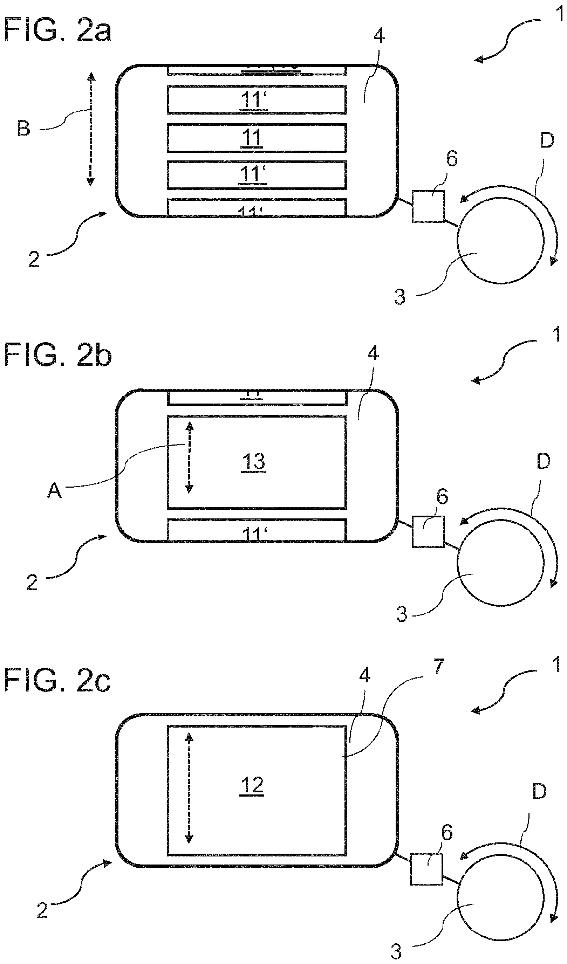

In den Figuren 2a bis 2c ist in einer schematischen Darstellung ein Bediensystem 1 gemäß einer ersten beispielhaften Ausführungsform der vorliegenden Erfindung in verschiedenen Betriebszuständen dargestellt. Solch ein Bediensystem 1 dient als Benutzerschnittstelle bzw. Mensch-Maschinen-Schnittstelle. Wesentliche Bestandteile des Bediensystems 1 sind die Anzeigevorrichtung 2 mit der Anzeigefläche 4, das Eingabeelement 3 und eine Steuervorrichtung 6. Vorzugsweise handelt es sich bei der Anzeigevorrichtung 2 des Bediensystems 1 um die in Figur 1 dargestellte Anzeigevorrichtung 2, die vom Fahrersitz aus gesehen hinter dem Lenkrad 15 in das Armaturenbrett 10 eingelassen ist.

Weiterhin ist es vorgesehen, dass die in einer Liste auf der Anzeigefläche 4 gezeigten Listenelemente 11, 11' zusammen mit den Elementen 12, die jeweils zumindest einem Listenelement 11, 11' zugeordnet sind, in einer Speichereinrichtung (nicht dargestellt), die wiederum z. B. in die Steuervorrichtung 6 integriert ist, abgespeichert sind. Ferner ist die Steuervorrichtung 6 einerseits an das Eingabeelement 3 und andererseits an die Anzeigevorrichtung 2 angekoppelt und derart konfiguriert, dass mittels der Steuervorrichtung 6 eine wiedergebende Anzeige auf der Anzeigefläche 4 steuerbar ist. Insbesondere lässt sich, beispielsweise durch eine manuelle Eingabe am Eingabeelement 3, eine Anzeige auf der Anzeigefläche 4 veranlassen oder ändern. Zum Zwecke der Ansteuerung der Anzeigefläche 4 durch die Steuervorrichtung 6 ist die Steuervorrichtung 6 beispielsweise als mit einem Softwareprogramm programmierter Prozessor bzw. Computereinheit ausgestaltet. Hierbei ist es vorstellbar, dass die Steuervorrichtung 6 beispielsweise als einzelnes Bauteil räumlich getrennt von der Anzeigevorrichtung 2 und dem Eingabeelement 3 in das Armaturenbrett 10 eingelassen oder ein Teil eines fahrzeugintegrierten Infotainmentsystems ist.

Um den bei der Darstellung von Informationen benötigten Platz möglichst gering zu halten, ist es vorgesehen, dass die Steuervorrichtung 6 so konfiguriert ist, dass sie die Anzeigefläche 4 derart ansteuert, dass in einem ersten Anzeigemodus 21, der in Figur 2a dargestellt ist, die Listenelemente 11, 11' zumindest teilweise listenartig dem Nutzer zur Auswahl angeboten werden. Mittels einer Bildlauf-Funktionalität bzw. einer Scroll-Funktionalität lässt sich zwischen den einzelnen Listenelementen 11 in der Liste wechseln. Handelt es sich bei dem Eingabeelement 3 um einen Dreh-Drückschalter, lässt sich mittels der Steuervorrichtung eine Drehbewegung D am Eingabeelement 3, d. h. dem Dreh-Drückschalter, in eine Bildlaufbewegung entlang einer Bildlaufrichtung B übersetzten, wodurch dem Nutzer die Möglichkeit zum Wechseln zwischen den Listenelementen 11, 11' mit dem Ziel einer Anwahl eines bestimmten Listenelements 11 gegeben wird.

Vorzugsweise wird dabei das aktuell angewählte Listenelement 11 durch seine jeweilige visuelle Darstellung optisch hervorgehoben. Hat der Nutzer das gewünschte Listenelement 11 angewählt bzw. markiert, kann durch eine Drückbetätigung am Dreh-Drückschalter dem Nutzer in einem zweiten Anzeigemodus 21 Zugang zu den Elementen, die dem ausgewählten Listenelement 11 zugeordnet sind, verschafft werden. Hierbei ist es vorgesehen, dass die Steuervorrichtung 6 so konfiguriert ist, dass sie die Anzeigefläche 4 derart ansteuert, dass bei der Auswahl ein Wechsel W vom ersten Anzeigemodus 21 in einen zweiten Anzeigemodus 22 durch eine animierte Öffnungsbewegung A, die beispielhaft in Figur 2b angedeutet ist, veranlasst wird. Dabei ist es vorgesehen, dass bei der animierten Öffnungsbewegung A durch ein Verschieben der weiteren Listenelemente ein Darstellungsbereich 13 bereitgestellt wird. In dem in Figur 2b dargestellten konkreten Ausführungsbeispiel ist es vorgesehen, dass das ausgewählte Listenelement 11 vergrößert bzw. aufgezoomt wird und zum ausgewählten Listenelement benachbarte weitere Listenelemente 11' auseinandergeschoben werden. Durch dieses Auseinanderschieben werden die weiteren Listenelemente 11 zu einer Anzeigenflächenkante, hier der oberen Anzeigenflächenkante, und zu einer der Anzeigefläche gegenüberliegenden Anzeigeflächenkante, hier der oberen Anzeigenflächenkante, verschoben und schließlich von der Anzeigefläche 4 verdrängt, so dass nach Abschluss der animierten Öffnungsbewegung A der Darstellungsbereich 13 zur Anzeige eines oder mehrerer Elemente 12, die dem ausgewählten Listenelement 11 zuzuordnen sind, bereitgestellt werden kann, wie es in Figur 2c gezeigt ist.

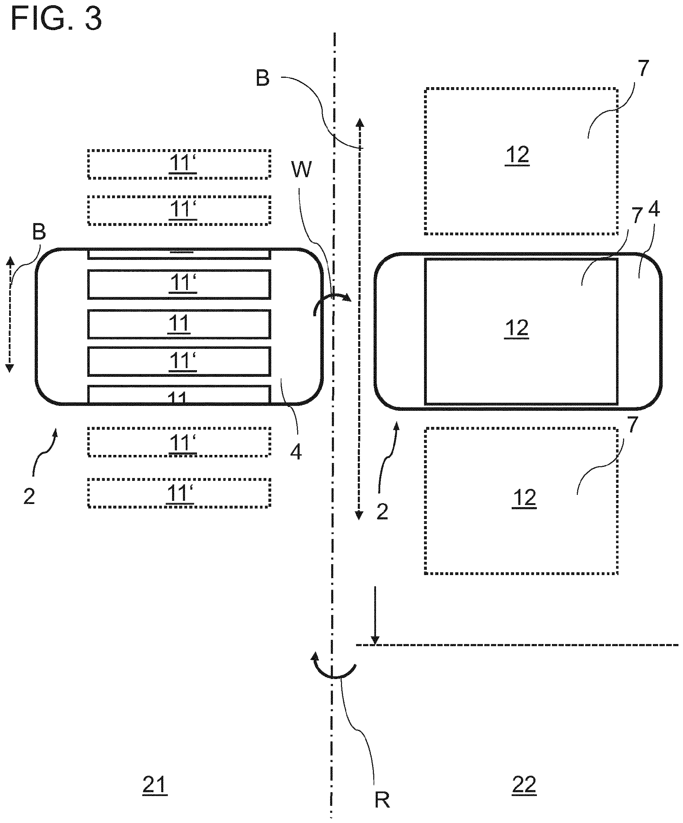

In Figur 3 ist eine weitere schematische Darstellung der Anzeigevorrichtung 2 des Bediensystems 1 aus den Figuren 2a bis 2c illustriert, bei der die Anzeigevorrichtung 2 im ersten Anzeigemodus 21 (links) und die Anzeigevorrichtung 2 im zweiten Anzeigemodus 22 (rechts) nebeneinander dargestellt sind. Wie bereits oben beschrieben, sind im ersten Anzeigemodus 21 die Listenelemente 11, 11' in einer Liste auf der Anzeigefläche 4 wiedergegeben. Um den Platzbedarf für die Anzeigefläche 4 im ersten Anzeigemodus 21 möglichst gering zu halten, ist es vorgesehen, dass statt der gesamten Liste nur ein Teil der Listenelemente 11', 11 dargestellt wird und über die Bildlauf-Funktionalität die nichtdargestellten Listenelemente (gestrichelt) bei Bedarf in bzw. auf die Anzeigefläche 4 geschoben werden bzw. nachrücken. Abhängig von der Bildlaufrichtung B werden die bislang nicht dargestellten Listenelemente 11, 11' von oben oder von unter durch eine kontinuierliche Bewegung in die Anzeigefläche 4 eingeschoben, während auf der jeweils gegenüberliegenden Anzeigenflächenkante ein bislang angezeigtes Listenelement 11, 11' aus der Anzeigefläche 4 herausgeschoben wird.

Auf der rechten Seite der Figur 3 ist der zweite Anzeigemodus 22 dargestellt, der über die animierte Öffnungsbewegung A beim Wechsel W vom ersten Anzeigemodus 21 in den zweiten Anzeigemodus 22 realisiert wird. Hierbei ist es vorzugsweise vorgesehen, dass ein einzelnes Element in Form eines Informationsfensters 7 auf der Anzeigefläche 4 dargestellt wird. Das Informationsfenster 7 umfasst beispielsweise textfreie Graphiken, die dem Nutzer einen vergleichsweise schnellen Zugang zum Informationsgehalt des Elements 12 erlauben. Mit einem einzelnen Element 12 in Gestalt eines Informationsfensters 7 auf der Anzeigefläche 4 lässt sich dabei vorteilhaft die Graphik so groß dimensionieren, dass der Nutzer auch Details auf den ersten Blick erkennt. Neben dem auf der Anzeigefläche angezeigten Element 12 ist es vorstellbar, dass dem ausgewählten Listenelement 11 weitere aktuell nicht dargestellte Elemente 11 zugeordnet sind, die in der gewählten Illustration gestrichelt oberhalb und unterhalb der Anzeigevorrichtung 2 dargestellt sind und einen den Elementen zuzuschreibenden Listencharakter unterstreichen sollen. Durch die Nutzung der Bildlauf-Funktionalität lässt sich dabei zwischen den einzelnen Elementen 12 bzw. Informationsfenstern 7 wechseln.

Insbesondere ist es vorgesehen, dass bei gleichartiger Betätigung des Eingabeelements der Wechsel zwischen den Elementen in einem Bildlauf gleichgerichtet ist zu der Bildlaufrichtung B im ersten Anzeigemodus 21. Weiterhin ist es vorgesehen, dass die dem ausgewählten Listenelement 11 zugeordneten Elemente 12 listenartig sortiert sind, indem sie beispielsweise listenartig in der Speichereinrichtung hinterlegt sind. Infolge der listenartigen Sortierung lässt sich den Elementen 12 in der Liste ein Listenanfang und ein Listenende zuteilen. Vorzugsweise ist es vorgesehen, dass der Nutzer mittels der Steuervorrichtung 6 und des Eingabeelements 3 eine Rückkehr in den ersten Anzeigemodus 21 veranlassen kann, wenn er mittels der Bildlauf-Funktionalität zum Element am Listenanfang oder Listenende gelangt, wobei der Nutzer durch das Bediensystem 1 auf ein Erreichen des Listenanfangs oder des Listenendes aufmerksam gemacht wird und mittels einer Wiederaufnahme der Bildlauf-Funktionalität bzw. deren Fortsetzung, insbesondere nach einem festgelegten Zeitintervall, eine Rückkehr R in den ersten Anzeigemodus 21 veranlasst. Hierbei kann das Bediensystem 1 den Nutzer durch ein optisches, akustisches und/oder haptisches Signal auf das Erreichen des Listenanfangs oder des Listenendes aufmerksam machen.

Die Erfindung soll nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche.

### Bezugszeichenliste

- 1: Bediensystem
- 2: Anzeigevorrichtung
- 3: Eingabeelement
- 6: Steuervorrichtung
- 7: Informationsfenster
- 10: Armaturenbrett
- 11: Listenelement
- 11': Weiteres Listenelement
- 12: Element
- 13: Darstellungsbereich
- 15: Lenkrad
- 21: Erste Anzeigemodus
- 22: Zweiter Anzeigemodus
- A: Animierte Öffnungsbewegung
- B: Bildlaufrichtung
- W: Wechsel
- R: Rückkehr

## Patentansprüche

1. Bediensystem (1) für ein Fahrzeug, wobei das Bediensystem (1)
-- eine Anzeigevorrichtung (2) mit einer Anzeigefläche (4),
-- eine Speichereinrichtung zum Speichern von Listenelementen (11, 11') und Elementen (12), die den Listenelementen (11, 11') zugeordnet sind,
-- ein Eingabeelement (3) zur Auswahl eines Listenelements (11) durch einen Nutzer und
-- eine Steuervorrichtung (6), die an die Anzeigevorrichtung (7) und das Eingabeelement (3) angekoppelt ist und mit der eine wiedergebende Anzeige auf der Anzeigefläche (4) steuerbar ist,
umfasst,
wobei die Steuervorrichtung (6) konfiguriert ist, die Anzeigefläche (4) derart anzusteuern, dass in einem ersten Anzeigemodus (21) zumindest ein Teil der Listenelemente (11) auf der Anzeigefläche (4) in Form einer Liste angezeigt wird und dass durch eine Auswahl eines Listenelements (11) ein Wechsel (W) vom ersten Anzeigemodus (21) zu einem zweiten Anzeigemodus (22) realisiert wird, wobei beim Wechsel (W) eine animierte Öffnungsbewegung (A) erzeugt wird, bei der
-- ein Darstellungsbereich (13) durch ein Vergrößern eines dem ausgewählten Listenelement (11) zugeordneten Anzeigeflächenbereichs freigegeben wird und die zum ausgewählten Listenelement (11) benachbarten weiteren Listenelemente (11') verschoben werden, bis alle weiteren Listenelemente (11') von der Anzeigefläche durch den Darstellungsbereich verdrängt sind und
-- der Darstellungsbereich (13) für die wiedergebende Anzeige zumindest eines zugeordneten Elements (12) des ausgewählten Listenelements (11'), insbesondere in Form eines Informationsfensters (7), bereitgestellt wird,
wobei die Steuervorrichtung (6) weiterhin konfiguriert ist, die Anzeigefläche (4) derart anzusteuern, dass im zweiten Anzeigemodus (22) ein einzelnes Element (12) in Form eines einzelnen Informationsfensters (7) angezeigt wird, und die Anzeigefläche (4) derart anzusteuern, dass im ersten Anzeigemodus (21) ein Wechsel zwischen den Listenelementen (11, 11') und im zweiten Anzeigemodus (22) ein Wechsel zwischen den Elementen (12) des ausgewählten Listenelements (11) durch eine Bildlauf-Funktionalität realisiert wird; und
wobei die einem Listenelement (11) zugeordneten Elemente (12) in einer Liste mit einem Listenanfang und einem Listenende sortiert sind, wobei das Bediensystem (1) derart ausgestaltet ist, dass am Listenanfang und/oder am Listenende ein Softanschlag vorgesehen ist, wobei eine Überwindung des Softanschlags beim Erreichen des Listenanfangs und/oder des Listenendes eine direkte Rückkehr in den ersten Anzeigemodus (21) auslöst.

2. Bediensystem (1) gemäß Anspruch 1, wobei die Steuervorrichtung (6) konfiguriert ist, die Anzeigefläche (4) derart anzusteuern, dass im ersten Anzeigemodus (21) im Wesentlichen die gesamte Anzeigefläche (4) zur wiedergebenden Anzeige des zumindest einen Teils der Listenelemente (11, 11') und/oder im zweiten Anzeigemodus (22) im Wesentlichen die gesamte Anzeigefläche (4) zur wiedergebenden Anzeige des zumindest einen Elements (12) des ausgewählten Listenelements (11) genutzt wird.

3. Bediensystem (1) gemäß einem der vorhergehenden Ansprüche, wobei die Steuervorrichtung (6) konfiguriert ist, die Anzeigefläche (4) derart anzusteuern, dass im ersten Anzeigemodus (21) ein Wechsel zwischen den Listenelementen (11, 11') und/oder im zweiten Anzeigemodus (22) ein Wechsel zwischen den Elementen (12) des ausgewählten Listenelements (11) durch eine Bildlauf-Funktionalität, nämlich durch eine Bildlauf-Funktionalität mit einer gleichgerichteten Bildlaufrichtung (B) im ersten Anzeigemodus (21) und dem zweiten Anzeigemodus (22), realisiert wird.

4. Bediensystem (1) gemäß Anspruch 3, wobei im zweiten Anzeigemodus (22) mittels der Bildlauf-Funktionalität zwischen jeweils einzeln auf der Anzeigefläche (4) dargestellten Informationsfenstern (7) gewechselt wird.

5. Bediensystem (1) gemäß einem der vorhergehenden Ansprüche, wobei zur Ausbildung eines Softanschlags die Steuervorrichtung (6) konfiguriert ist, die Anzeigefläche (4) derart anzusteuern, dass beim Erreichen des Listenanfangs oder des Listenendes der Bildlauf in eine bisherige Bildlaufrichtung (B) gestoppt wird, und wobei das Bediensystem vorzugsweise ferner ein optisches, akustisches und/oder haptisches Signal ausgibt.

6. Bediensystem (1) gemäß Anspruch 5, wobei eine Überwindung des Softanschlags dadurch realisiert wird, dass ein festgelegtes Zeitintervall, das mit einem Unterbrechen des Betätigungsvorgangs am Eingabeelement (3) nach Erreichen des Listenanfangs oder des Listenendes beginnt, abgelaufen ist, insbesondere wenn nach Ablauf des Zeitintervalls ein Betätigungsvorgang am Eingabeelement (3) getätigt wird.

7. Bediensystem (1) gemäß einem der vorhergehenden Ansprüche, wobei die Steuervorrichtung (6) die Anzeigefläche (4) so ansteuert, dass die animierte Öffnungsbewegung (A) derart gestaltet ist, dass zur Freigabe des Darstellungsbereichs (13) der dem ausgewählten Listenelement (11) zugeordnete Anzeigeflächenbereich sowohl in Richtung einer oberen und einer unteren Kante der Anzeigenfläche (4) aufgezoomt wird, insbesondere symmetrisch aufgezoomt wird, wobei die zum ausgewählten Listenelement (11) benachbarten weiteren Listenelemente (11') zuerst in Richtung der oberen oder unteren Kante der Anzeigenfläche (4) geschoben und anschließend aus der Anzeigenfläche (4) hinausgeschoben werden.

8. Bediensystem (1) gemäß Anspruch 7, wobei bei der animierten Öffnungsbewegung (A) die weiteren Listenelemente (11')
-- mit einer während des Öffnungsbewegung zunehmenden Geschwindigkeit und/oder
-- mit einer Geschwindigkeit zwischen 1 cm/s und 20 cm/s, bevorzugt mit einer Geschwindigkeit zwischen 2 cm/s und 14 cm/s und besonders bevorzugt mit einer Geschwindigkeit zwischen 10 cm/s und 13 cm/s
auseinandergeschoben werden.

9. Bediensystem (1) gemäß einem der vorhergehenden Ansprüche, wobei die den Listenelementen (11) zugeordneten Elemente (12) Detailinformationen zum ausgewählten Listenelement (11) umfassen.

10. Bediensystem (11) gemäß einem der vorhergehenden Ansprüche, wobei die Elemente (12) im zweiten Anzeigemodus (22) textfreie Graphiken, beispielsweise schematische Darstellungen und/oder Piktogramme, mit Text kombinierte Graphiken, Videobilder und/oder Fahrzeugkamerabilder umfassen.

11. Bediensystem (1) gemäß einem der vorhergehenden Ansprüche, wobei sich zur Unterscheidung zwischen Listenelement (11) und Element (12) eine Hintergrundfarbe der Anzeigefläche (4) im ersten Anzeigemodus (21) von der Hintergrundfarbe der Anzeigefläche im zweiten Anzeigemodus (22) unterscheidet.

12. Fahrzeug, insbesondere Nutzfahrzeug, mit Bediensystem gemäß einem der vorhergehenden Ansprüche.

## Claims

1. An operating system (1) for a vehicle, wherein the operating system (1) comprises
-- a display device (2) with a display area (4),
-- a memory device for storing list elements (11, 11') and elements (12) which are assigned to the list elements (11, 11'),
-- an input element (3) for selecting a list element (11) by a user, and
-- a control device (6) which is coupled to the display device (7) and the input element (3) and with which a reproducing display on the display area (4) can be controlled,
wherein the control device (6) is configured to control the display area (4) such that in a first display mode (21) at least some of the list elements (11) are displayed on the display area (4) in the form of a list and that by selecting a list element (11) a change (W) from the first display mode (21) to a second display mode (22) is realised, wherein during the change (W) an animated opening movement (A) is generated in which
-- a displaying area (13) is released by enlarging a display area region assigned to the selected list element (11) and the further list elements (11') neighbouring the selected list element (11) are displaced until all further list elements (11') are displaced from the display area by the displaying area and
-- the displaying area (13) is provided for the reproducing display of at least one associated element (12) of the selected list element (11'), in particular in the form of an information window (7),
wherein the control device (6) is further configured to control the display area (4) such that in the second display mode (22) a single element (12) is displayed in the form of a single information window (7), and to control the display area (4) such that in the first display mode (21) a change between the list elements (11, 11') and in the second display mode (22) a change between the elements (12) of the selected list element (11) is realised by a scrolling functionality; and
wherein the elements (12) assigned to a list element (11) are sorted in a list with a list start and a list end, wherein the operating system (1) is designed in such a way that a soft stop is provided at the list start and/or at the list end, wherein overcoming the soft stop when reaching the list start and/or the list end triggers a direct return to the first display mode (21).

2. The operating system (1) according to claim 1, wherein the control device (6) is configured to control the display area (4) such that in the first display mode (21) essentially the entire display area (4) is used for the reproducing display of the at least one part of the list elements (11, 11') and/or in the second display mode (22) essentially the entire display area (4) is used for the reproducing display of the at least one element (12) of the selected list element (11).

3. The operating system (1) according to one of the preceding claims, wherein the control device (6) is configured to control the display area (4) such that in the first display mode (21) a change between the list elements (11, 11') and/or in the second display mode (22) a change between the elements (12) of the selected list element (11) is realised by a scrolling functionality, namely by a scrolling functionality with a rectified scrolling direction (B) in the first display mode (21) and the second display mode (22).

4. The operating system (1) according to claim 3, wherein in the second display mode (22) the scrolling functionality is used to switch between information windows (7) displayed individually on the display area (4).

5. The operating system (1) according to one of the preceding claims, wherein, in order to form a soft stop, the control device (6) is configured to actuate the display area (4) such that, when the start of the list or the end of the list is reached, the scrolling in a previous scrolling direction (B) is stopped, and wherein the operating system preferably also outputs an optical, acoustic and/or haptic signal.

6. The operating system (1) according to claim 5, wherein overcoming of the soft stop is realised such that a fixed time interval, which begins with an interruption of the actuation process on the input element (3) after reaching the start of the list or the end of the list, has expired, in particular if an actuation process is carried out on the input element (3) after the time interval has expired.

7. The operating system (1) according to one of the preceding claims, wherein the control device (6) controls the display area (4) such that the animated opening movement (A) is designed such that, to release the displaying area (13), the display area associated with the selected list element (11) is zoomed in both in the direction of an upper and a lower edge of the display area (4), in particular symmetrically, wherein the further list elements (11') neighbouring the selected list element (11) are first pushed in the direction of the upper or lower edge of the display area (4) and then pushed out of the display area (4).

8. The operating system (1) according to claim 7, wherein during the animated opening movement (A) the further list elements (1 1')
-- with an increasing speed during the opening movement and/or
-- at a speed of between 1 cm/s and 20 cm/s, preferably at a speed of between 2 cm/s and 14 cm/s and particularly preferably at a speed of between 10 cm/s and 13 cm/s are pushed apart.

9. The operating system (1) according to one of the preceding claims, wherein the elements (12) assigned to the list elements (11) comprise detailed information on the selected list element (11).

10. The operating system (11) according to one of the preceding claims, wherein the elements (12) in the second display mode (22) comprise text-free graphics, for example schematic representations and/or pictograms, graphics combined with text, video images and/or vehicle camera images.

11. The operating system (1) according to one of the preceding claims, wherein a background colour of the display area (4) in the first display mode (21) differs from the background colour of the display area in the second display mode (22) in order to distinguish between list element (11) and element (12).

12. A vehicle, in particular commercial vehicle, with operating system according to one of the preceding claims.

## Revendications

1. Système d'exploitation (1) pour véhicule, le système d'exploitation (1) comprenant
-- un dispositif d'affichage (2) comportant une surface d'affichage (4),
-- un moyen de stockage destiné à stocker des éléments de liste (11, 11') et des éléments (12) qui sont associés aux éléments de liste (11, 11'),
-- un élément de saisie (3) permettant la sélection d'un élément de liste (11) par un utilisateur et
-- un dispositif de commande (6) qui est couplé au dispositif d'affichage (7) et à l'élément de saisie (3) et au moyen duquel un affichage de reproduction peut être commandé sur la surface d'affichage (4),
dans lequel le dispositif de commande (6) est configuré pour commander la surface d'affichage (4) de telle sorte que, dans un premier mode d'affichage (21), au moins une partie des éléments de liste (11) soit affichée sur la surface d'affichage (4) sous la forme d'une liste et que, par une sélection d'un élément de liste (11), un basculement (W) du premier mode d'affichage (21) à un deuxième mode d'affichage (22) soit réalisé, dans lequel un mouvement d'ouverture animé (A) est généré lors du basculement (W), dans lequel
-- une zone de représentation (13) est libérée par agrandissement d'une zone de surface d'affichage associée à l'élément de liste (11) sélectionné et les autres éléments de liste (11') voisins de l'élément de liste (11) sélectionné sont décalés jusqu'à ce que tous les autres éléments de liste (11') soient déplacés hors de la surface d'affichage par la zone de représentation, et
-- la zone de représentation (13) est fournie pour l'affichage de reproduction d'au moins un élément associé (12) de l'élément de liste sélectionné (11'), en particulier sous la forme d'une fenêtre d'information (7),
dans lequel le dispositif de commande (6) est en outre configuré pour commander la surface d'affichage (4) de telle sorte que, dans le deuxième mode d'affichage (22), un élément unique (12) soit affiché sous la forme d'une fenêtre d'information (7) unique, et pour commander la surface d'affichage (4) de telle sorte que, dans le premier mode d'affichage (21), un basculement entre les éléments de liste (11, 11') soit réalisé et que, dans le deuxième mode d'affichage (22), un basculement entre les éléments (12) de l'élément de liste sélectionné (11) soit réalisé par une fonctionnalité de défilement ; et
dans lequel les éléments (12) associés à un élément de liste (11) sont triés en une liste ayant un début de liste et une fin de liste, dans lequel le système d'exploitation (1) est conçu de telle sorte qu'en début de liste et/ou en fin de liste, une butée logicielle soit prévue, dans lequel un dépassement de la butée logicielle lorsque le début de liste et/ou la fin de liste est atteint déclenche un retour direct dans le premier mode d'affichage (21).

2. Système d'exploitation (1) selon la revendication 1, dans lequel le dispositif de commande (6) est configuré pour commander la surface d'affichage (4) de telle sorte que, dans le premier mode d'affichage (21), pratiquement toute la surface d'affichage (4) soit utilisée pour l'affichage de reproduction de ladite au moins une partie des éléments de liste (11, 11') et/ou que, dans le deuxième mode d'affichage (22), pratiquement toute la surface d'affichage (4) soit utilisée pour l'affichage de reproduction dudit au moins un élément (12) de l'élément de liste sélectionné (11).

3. Système d'exploitation (1) selon l'une des revendications précédentes, dans lequel le dispositif de commande (6) est configuré pour commander la surface d'affichage (4) de telle sorte que, dans le premier mode d'affichage (21), un basculement entre les éléments de liste (11, 11') soit réalisé et/ou que, dans le deuxième mode d'affichage (22), un basculement entre les éléments (12) de l'élément de liste (11) sélectionné soit réalisé par une fonctionnalité de défilement, à savoir par une fonctionnalité de défilement ayant une direction de défilement (B) orientée dans le même sens dans le premier mode d'affichage (21) et dans le deuxième mode d'affichage (22).

4. Système d'exploitation (1) selon la revendication 3, dans lequel, dans le deuxième mode d'affichage (22), un basculement est effectué, au moyen de la fonctionnalité de défilement, entre des fenêtres d'information (7) représentées chacune individuellement sur la surface d'affichage (4).

5. Système d'exploitation (1) selon l'une des revendications précédentes, dans lequel, pour former une butée logicielle, le dispositif de commande (6) est configuré pour commander la surface d'affichage (4) de telle sorte que, lorsque le début de liste ou la fin de liste est atteint, le défilement dans une direction de défilement (B) précédente soit interrompu, et dans lequel le système d'exploitation délivre en outre de préférence un signal optique, acoustique et/ou haptique.

6. Système d'exploitation (1) selon la revendication 5, dans lequel un dépassement de la butée logicielle est réalisé par le fait qu'il s'est écoulé un intervalle de temps fixe, qui commence par une interruption de l'opération d'actionnement de l'élément de saisie (3) après que le début de liste ou la fin de liste a été atteint, notamment lorsqu'une opération d'actionnement est effectuée sur l'élément de saisie (3) après que ledit intervalle de temps s'est écoulé.

7. Système d'exploitation (1) selon l'une des revendications précédentes, dans lequel le dispositif de commande (6) commande la surface d'affichage (4) de telle sorte que le mouvement d'ouverture animé (A) s'effectue de manière à ce que, pour libérer la zone de représentation (13), la zone de surface d'affichage associée à l'élément de liste sélectionné (11) soit agrandie, en particulier de manière symétrique, à la fois en direction d'un bord supérieur et d'un bord inférieur de la surface d'affichage (4), dans lequel les autres éléments de liste (11') voisins de l'élément de liste sélectionné (11) sont d'abord repoussés en direction du bord supérieur ou inférieur de la surface d'affichage (4) et sont ensuite repoussés hors de la surface d'affichage (4) .

8. Système d'exploitation (1) selon la revendication 7, dans lequel, lors du mouvement d'ouverture animé (A), les autres éléments de liste (11') sont écartés les uns des autres
-- à une vitesse qui augmente pendant le mouvement d'ouverture, et/ou
-- à une vitesse comprise entre 1 cm/s et 20 cm/s, de préférence à une vitesse comprise entre 2 cm/s et 14 cm/s et de manière particulièrement préférée à une vitesse comprise entre 10 cm/s et 13 cm/s.

9. Système d'exploitation (1) selon l'une des revendications précédentes, dans lequel les éléments (12) associés aux éléments de liste (11) comprennent des informations détaillées concernant l'élément de liste (11) sélectionné.

10. Système d'exploitation (11) selon l'une des revendications précédentes, dans lequel les éléments (12) du deuxième mode d'affichage (22) comprennent des graphiques sans texte, par exemple des représentations schématiques et/ou des pictogrammes, des graphiques combinés à du texte, des images vidéo et/ou des images de caméra de véhicule.

11. Système d'exploitation (1) selon l'une des revendications précédentes, dans lequel, pour distinguer l'élément de liste (11) de l'élément (12), une couleur de fond de la surface d'affichage (4) dans le premier mode d'affichage (21) diffère de la couleur de fond de la surface d'affichage dans le deuxième mode d'affichage (22) .

12. Véhicule, en particulier véhicule utilitaire, comprenant système d'exploitation selon l'une des revendications précédentes.
